# EUROPÄISCHE PATENTSCHRIFT

(11) **EP 4 093 217 B1**
(45) Veröffentlichungstag und Bekanntmachung des Hinweises auf die Patenterteilung: **01.04.2026**
(21) Anmeldenummer: 21703146.7
(22) Anmeldetag: 15.01.2021
(51) Int. Cl.: A23L 33/185, A23J 1/14, A23J 3/14, A23K 10/30, A23K 20/147, A23K 10/37, A23K 50/75, C11B 1/00, C11B 13/00

(54) **VERFAHREN ZUR GEWINNUNG EINES ODER MEHRERER PROTEINPRÄPARATE UND ÖLFRAKTIONEN AUS DEN SAMEN VON SONNENBLUMEN**
METHOD FOR OBTAINING ONE OR MORE PROTEIN PREPARATIONS AND OIL FRACTIONS FROM SUNFLOWER SEEDS
PROCÉDÉ D'OBTENTION D'UNE OU DE PLUSIEURS PRÉPARATIONS DE PROTÉINES ET DE FRACTIONS D'HUILE À PARTIR DE GRAINES DE TOURNESOL

(30) Priorität: 24.01.2020 DE 102020200863; 10.02.2020 DE 102020201598
(43) Veröffentlichungstag der Anmeldung: 30.11.2022
(73) Patentinhaber: Fraunhofer-Gesellschaft zur Förderung der angewandten Forschung e.V., 80686 München (DE)
(72) Erfinder: EISNER, Peter, 85354 Freising (DE); MITTERMAIER, Stephanie, 85354 Freising (DE)
(74) Vertreter: Gagel, Roland
(86) Internationale Anmeldenummer: PCT/EP2021/050805
(87) Internationale Veröffentlichungsnummer: WO 2021/148321

(56) Entgegenhaltungen:
- EP-B1- 2 163 159
- WO-A1-2019/048695
- DE-A1- 2 421 270
- US-A1- 2012 009 287
- LESLIE A J ET AL: "NUTRITIVE VALUE OF AIR.CI,ASSIFIED RAPESEED FRACTIONS", CAN. J. ANIM. SCI, vol. 53, 1 January 1972 (1972-01-01), pages 153 - 156, XP055787914

## Beschreibung

### Anwendungsgebiet

Die Erfindung betrifft ein Verfahren zur Gewinnung eines oder mehrerer Proteinpräparate und Ölfraktionen aus den Samen von Sonnenblumen. Bei dem Verfahren bereitgestellte oder gebildete Fraktionen aus den Samen lassen sich als Lebensmittelzutaten, Futtermittel, technische Hilfsstoffe, Energieträger oder als Futterzusatz oder Einstreu in der Tierhaltung nutzen.

### Stand der Technik

Vor dem Hintergrund knapper werdender Agrarflächen und Ressourcen gewinnen pflanzliche Proteinpräparate für die Ernährung des Menschen, für technische Applikationen und für den Einsatz in Tierfutter immer mehr an Bedeutung.

Eine kostengünstige Quelle für Lebens- und Futtermittel-proteine sind Press- und Extraktionsrückstände aus der Gewinnung von Speiseöl aus den Samen von Sonnenblumen und Raps. Diese Samen sind gekennzeichnet durch eine feste Schale mit überwiegend dunkler Pigmentierung und durch ein ölhaltiges Fruchtfleisch. Ein Abtrennen der Schalen ist bei diesen Rohstoffen möglich, jedoch besonders bei Rapssamen verfahrenstechnisch sehr aufwändig.

Die bei der Ölgewinnung anfallenden Press- und Extraktionsrückstände werden heute vorwiegend als Futtermittel genutzt. Jedoch ist ihr Einsatz trotz des hohen Proteingehalts limitiert. Dies liegt zu einen an einem sehr hohen Schalenanteil im Rückstand, der über 25 Mass.-% liegt, in Einzelfällen aber auch über 50 Mass.-% liegen kann. Weiterhin ist der Anteil störender Begleitstoffe sehr hoch, vor allem der Gehalt sekundärer Pflanzenstoffe wie z.B. Polyphenole, Tannine, Glucosinolate oder Phytinsäure. Diese Komponenten können in Summe in den Rückständen über 10 Mass.-% betragen und beeinträchtigen Farbe, Geschmack und die Verdaubarkeit der Proteine ganz erheblich. Presskuchen und Extraktionsrückstände aus der Gewinnung von Sonnenblumen- und Rapsöl eignen sich daher nicht zur Herstellung von hochwertigen Proteinmehlen für Lebens- und Futtermittel und sind aufgrund der enthaltenen sekundären Pflanzenstoffe nur in kleinen Anteilen für die Fütterung einiger Tierarten geeignet.

Sonnenblumen- und Rapssamen werden nach Stand der Technik mit dem Fokus auf eine hohe Ölausbeute verarbeitet. Dabei werden sie zunächst von Besatz befreit, teilweise konditioniert (Einstellung einer definierten Temperatur und Feuchte), dann durch Pressen mechanisch vorentölt (Restölgehalte maximal 10 Mass.-%) und anschließend der Restölgehalt mit Hexan aus den Presskuchen extrahiert. Auch eine sog. Fertigpressung bis auf Restölgehalte von ca. 5 Mass.-% ohne nachfolgende Extraktion wird durchgeführt, wobei der Restölgehalt in den Presskuchen die Lagerstabilität der Rückstände reduziert.

Bisher werden Sonnenblumen- und Rapssamen überwiegend ungeschält oder teilgeschält gepresst. Bei der Teilschälung verbleiben über 50 Mass.-% der in den Samen enthaltenen Schalen vor der Entölung im Rohstoff, was im Mittel einem Restschalengehalt vor der Pressung von >12 Mass.-% bei Sonnenblumensamen und >8 Mass.-% bei Rapssamen entspricht. Insbesondere zur Pressung, d.h. Fertigpressung oder Vorpressung als Teilentölung, wird nach Stand der Technik ein erhöhter Schalenanteil als notwendig erachtet, um die Drainage des Öls aus der Presse zu erleichtern und damit den Durchsatz durch die Pressen zu erhöhen.

Seit einigen Jahren gibt es auch Ansätze, um Proteine aus den Rückständen der Sonnenblumen- oder Rapsölgewinnung zu Proteinmehlen oder -konzentraten aufzubereiten und sie somit für Lebensmittel- und hochwertige Futtermittelapplikationen nutzbar zu machen. Einige Veröffentlichungen beschreiben die Herstellung von Proteinkonzentraten aus Raps- und Sonnenblumensamen. Diese Proteinkonzentrate werden durch trocken- oder nasstechnische Aufbereitung (z.B. unter Einsatz von Lösemitteln) gewonnen, wobei das Protein im Rückstand verbleibt. Der hohe Anteil an unerwünschten Begleitstoffen und der hohe Rohfasergehalt schränken die Verwendung der Rückstände als Futtermittel jedoch ein, so dass ein besonderer Vorteil im Vergleich zu den Sonnenblumen- und Rapsextraktionsschroten vielfach nicht erkennbar wird. Die meisten dieser Proteinkonzentrate haben daher eine beschränkte Applikationsbreite und sind nur in geringen Konzentrationen in Futtermitteln einsetzbar.

Die DE 24 21 270 A1 beschreibt ein Verfahren zur Herstellung eines Proteinkonzentrates aus Raps, bei dem aus Rapssamen eine Fleischfraktion, eine feine Fraktion und eine Hülsenfraktion gewonnen wird. LESLIE A. J. et al.: "NUTRITIVE VALUE OF AIR-CLASSIFIED RAPESEED FRACTIONS", CAN. J. ANIM. SCI, Bd. 53, 1. Januar 1972, Seiten 153-156, XP055787914, offenbaren ein Verfahren, beim dem Rapssamen mittels Luft-Klassifikation und Siebungen in drei Fraktionen aufgeteilt wird, nämlich in eine Schalenfraktion, eine schalenfreie Fraktion, sowie einen Fraktion, welche beide Komponenten enthält.

In der EP 2 885 980 B1 wird unter anderem ein Verfahren zur Gewinnung von Sonnenblumenprotein als proteinreiches Nahrungs- oder Futtermittel beschrieben. Zur Herstellung des Futtermittels werden geschälte Sonnenblumenkerne mit einem Restschalengehalt von >5 Mass.-% eingesetzt. Es erfolgt eine Pressung der Saat auf einen Ölgehalt ≥8 Mass.-% bis ≤18 Mass.-% und einen Proteingehalt von ≥30% bis ≤45%, bezogen auf Trockenmasse. Auf einen Einfluss eines geringeren Restschalengehalts auf die Verdaubarkeit der Proteine wird nicht eingegangen. Zudem ist auch hier davon auszugehen, dass der hohe Rohfasergehalt und der hohe Chlorogensäuregehalt des Produkts dessen Akzeptanz und damit dessen Verwertbarkeit als Futtermittel stark einschränken können. In der Druckschrift wird allerdings nicht offenbart, ob dieses Verfahren eine ganzheitliche Verwertung aller Fraktionen der Samen ermöglicht.

Die WO 2010097238 A2 beschreibt ebenso ein Verfahren zur Herstellung von Proteinpräparaten aus geschälten Sonnenblumensamen. Bei dem Verfahren werden die Sonnenblumensamen bis auf einen Restschalengehalt von ≤ 5 Mass.% geschält oder geschälte Sonnenblumensamen mit einem Restschalengehalt von ≤ 5 Mass.% bereitgestellt. Es erfolgt eine mechanische Teilentölung der geschälten Sonnenblumensamen durch Pressen, die bis auf einen Fett- oder Ölgehalt der geschälten Sonnenblumensamen im Bereich zwischen 10 und 35 Mass.-% durchgeführt wird. Nach Durchführung eines oder mehrerer Extraktionsschritte mit mindestens einem Lösungsmittel wird ein entfettetes proteinhaltiges Mehl als Proteinpräparat erhalten. Das Proteinpräparat weist sowohl optisch als auch funktionell sehr vorteilhafte Eigenschaften auf, die einen direkten Einsatz im Lebens- oder Futtermittelbereich ermöglichen. Durch die niedrigen Temperaturen durch Pressung bei unter 80°C und Desolventierung bei unter 90 °C wird mit diesem Verfahren erreicht, dass gute technofunktionelle Eigenschaften erhalten bleiben, ein geringer Denaturierungsgrad vorliegt und damit eine sehr gute Verdaubarkeit und Bioverfügbarkeit gegeben sein sollten. Aufgrund der niedrigen Temperaturen im Verlauf der Verarbeitung der Sonnenblumensamen von unter 90 °C ergeben sich aber bei der industriellen Nutzung des Verfahrens sehr lange Verweilzeiten in den lösemittelbasierten Prozessstufen und hohe Kosten für den Prozess.

In der EP 2163159 B1 wird ein Verfahren zur Verwertung von Ölpflanzen beschrieben (z.B. aus Raps, Sonnenblumen, Lein oder Leindotter), bei dem Öl gewonnen wird und aus den restlichen bei der Ölgewinnung anfallenden Pflanzeninhaltsstoffen die Saatschalen zumindest teilweise entfernt und zumindest teilweise Proteine gewonnen werden. Die entproteinisierten Pflanzeninhaltsstoffe werden zumindest teilweise aufbereitet, um sie energetisch zu verwerten, insbesondere zur Erzeugung von Strom und/oder nutzbarer Wärme. Damit gelingt eine weitgehend ganzheitliche Nutzung der Fraktionen in Ölsamen in Form von Protein für Lebensmittel- und Futtermittelanwendungen und der von Protein befreiten Kohlenhydrat-reichen Fraktion als Energieträger.

Die WO 2019/048695 A1 offenbart ein Verfahren zur Gewinnung von Proteinpräparaten und mehrerer Ölfraktionen aus den Samen von Sonnenblumen, bei dem eine schalenarme Fraktion bereitgestellt und bis auf einen Restölgehalt von < 4 Mass.% entölt wird, wodurch ein Proteinpräparat und wenigstens eine Ölfraktion erhalten werden.

Die Aufgabe der vorliegenden Erfindung besteht darin, ein Verfahren zur Gewinnung eines oder mehrerer Proteinpräparate und Ölfraktionen aus den Samen von Sonnenblumen anzugeben, bei dem sich alle Fraktionen, die bei der Aufbereitung der Sonnenblumensamen anfallen, in möglichst hochwertige Zutaten für Lebensmittel-, Futtermittel-, energetische oder technische Applikationen überführen lassen.

### Beschreibung der Erfindung

Diese Aufgabe wird mit dem Verfahren nach Anspruch 1 gelöst. Vorteilhafte Ausgestaltungen und Weiterbildungen des Verfahrens sind Gegenstand der abhängigen Ansprüche oder lassen sich der nachfolgenden Beschreibung sowie den Ausführungsbeispielen entnehmen.

Bei dem erfindungsgemäßen Verfahren werden Sonnenblumensamen zunächst geschält und die Kerne anschließend durch Sieben, Sichten und Sortieren derart von den Schalen befreit und aufgeteilt, dass wenigstens drei Fraktionen mit den unten angegebenen Schalenanteilen erhalten werden, oder es werden bereits Fraktionen aus Sonnenblumensamen mit diesen Schalengehalten bereitgestellt. Erfindungsgemäß werden bei dem Verfahren folgende Schritte durchlaufen.

Bei den Sonnenblumensamen wird
- eine erste Fraktion abgetrennt bzw. bereitgestellt, deren Schalengehalt unter 1 Mass.-% liegt, vorteilhaft unter 0,5 Mass.-%, besonders vorteilhaft unter 0,1 Mass.-%,
- wobei die erste Fraktion durch zumindest teilweises Abtrennen des Öls auf einen Restölgehalt <3 Mass.-%, vorteilhaft <2 Mass.-% zu einem ersten Proteinpräparat weiterverarbeitet wird und dabei eine oder mehrere Ölfraktionen erhalten werden, und es wird
- eine zweite Fraktion erhalten bzw. bereitgestellt, deren Schalengehalt höher ist als der der ersten Fraktion, mindestens jedoch über 0,3 Mass.-%, vorteilhaft über 1 Mass.-%, besonders vorteilhaft über 5 Mass.-% aber unter 20 Mass.-%, vorteilhaft unter 10 Mass.-% beträgt,
- wobei aus der zweiten Fraktion Öl abgetrennt wird, wodurch eine oder mehrere weitere Ölfraktionen erhalten werden, und in einer vorteilhaften Ausgestaltung durch zumindest teilweises Abtrennen des Öls auf einen Restölgehalt unter 10 Mass.-%, vorteilhaft unter 3 Mass.-% ein zweites Proteinpräparat gewonnen wird, und es wird
- eine dritte Fraktion, im Folgenden auch als Schalenfraktion bezeichnet, mit einem Schalenanteil größer 60 Mass.-%, vorteilhaft größer 80 Mass.-% und kleiner 99 Mass.-%, vorteilhaft kleiner 90 Mass.-% abgetrennt bzw. bereitgestellt.

Vorteilhaft werden weitere Fraktionen erhalten bzw. bereitgestellt, die ebenfalls Proteine aus den Kernen von Sonnenblumensamen enthalten und aus denen Öl und ein proteinhaltiger Rückstand gewonnen werden kann, dessen Proteingehalt höher als der der Schalen ist.

Überraschenderweise kann durch diese Prozessführung aufgrund der Bereitstellung bzw. Bildung der mehreren Fraktionen mit den angegebenen Schalengehalten der Energieaufwand deutlich reduziert werden, der im Mittel für die Gewinnung von einem kg geschälter Kerne erforderlich ist. Der spezifische Energieaufwand wird dabei verglichen mit dem Energieaufwand, der zur Erzeugung oder Bereitstellung nur einer Fraktion erforderlich ist, wobei die eine Fraktion in Summe die gleiche Masse wie zwei oder mehreren erfindungsgemäßen Fraktionen aufweist und im Mittel den gleichen Anteil an Schalen wie die erfindungsgemäßen Fraktionen enthält. Durch Ausschleusen mehrerer Fraktionen mit unterschiedlichem Schalengehalt kann in Einzelfällen sogar ganz darauf verzichtet werden, einzelne Fraktion mehrfach durch die Schäl- und Sortiereinheit zu schleusen, da auch für einen entsprechend höheren Schalenanteil eine direkte Verwertung gegeben ist und somit keine weitere Aufarbeitung benötigt wird.

Durch die erfindungsgemäße Aufteilung der Fraktionen lassen sich alle anfallenden Fraktionen in Zutaten für Lebensmittel-, Futtermittel-, energetische oder technische Applikationen überführen. Insbesondere die Bereitstellung oder Bildung der ersten Fraktion führt dabei zu einem hochwertigen Proteinpräparat für Lebensmittel.

Zudem zeigt sich, dass es durch diese Fraktionierung auf einfache Weise gelingt, Pflanzenöle mit unterschiedlichen Eigenschaften aus einem Inputstrom simultan zu gewinnen. Bei geeigneter Prozessführung, insbesondere durch Reduktion des Schalenanteils in einer Fraktion auf kleiner 0,1 Mass.-% und ggf. in einer zweiten Fraktion auf Werte unter 1 Mass.-%, kann es gelingen, dass eine oder mehrere Ölfraktionen ohne eine weitere Behandlung (z.B. Raffination) direkt genutzt werden können, andere Fraktionen hingegen sollten weiter behandelt werden. So unterscheiden sich die Öle aus der ersten Fraktion, der zweiten Fraktion und ggf. der weiteren Fraktionen hinsichtlich ihrer Zusammensetzung, auch hinsichtlich ihres Geschmacks und ihrer Farbe zum Teil erheblich. Auch der Gehalt an geschmacksaktiven sekundären Pflanzenstoffen wie z.B. an Tanninen unterscheidet sich in Ölen aus erster und zweiter Fraktion deutlich. Somit können diese Öle für unterschiedliche Anwendungen direkt, nach einfacher Filtration oder nach einer weiteren Aufbereitung (z.B. Raffination oder Vermischung mit anderen Fraktionen) gezielt in verschiedenen Märkten für unterschiedliche Applikationen eingesetzt werden.

Beispielsweise zeichnet sich das Öl, das aus der ersten Fraktion von Sonnenblumensamen gewonnen wird, dadurch aus, dass es keine Kutikularwachse oder nur Spuren von Wachsen enthält und einen milden, nussigen Geschmack aufweist. Im Gegensatz dazu weisen Öle aus der zweiten Fraktion höhere Wachsanteile auf, schmecken leicht bitter und haben eine leicht dunklere Farbe. Diese Fraktion wird daher unraffiniert eher für technische Applikationen eingesetzt werden oder für die Humanernährung erst dann zum Einsatz kommen, wenn eine vollständige Raffination mit Winterisierung, Entschleimung, Entsäuerung, Bleichung und Desodorierung erfolgt ist.

Somit kann durch die erfindungsgemäße Fraktionierung von Sonnenblumensamen überraschenderweise der Anteil an Öl verringert werden, der einer Raffination unterzogen werden muss. Das spart Energie und den Einsatz von Chemikalien, die für das Entsäuern oder für die Desodorierung bei Ölen nach Stand der Technik erforderlich sind. Zudem reduzieren sich Ölverluste, die mit jedem Schritt der konventionellen Raffination von Öl einhergehen. Auf Grundlage der vorliegenden Erfindung kann der Prozess der Herstellung von Pflanzenöl im Vergleich zu den Verfahren nach Stand der Technik pro kg Eingangsmaterial deutlich ressourcen- und energieeffizienter gestaltet werden, es werden im Besonderen höhere Ölausbeuten erzielt.

Durch die erfindungsgemäße Fraktionierung ist es einfach möglich, je nach Marktnachfrage oder Rohstoffeigenschaften variable Mengen an den einzelnen Fraktionen herzustellen bzw. bereitzustellen, so dass mit Hilfe des Verfahrens auch ein besonders effizienter Betrieb im Sinne der Verwertbarkeit und damit der Ressourcennutzung erreicht werden kann. Es zeigt sich in orientierenden Versuchen, dass die erste Fraktion vorteilhaft zwischen 1 und 80 % der Anzahl der Kerne, die dem Gesamtprozess durch das Ausgangsmaterial zugeführt werden, enthalten sollte, vorteilhaft liegt der Anteil zwischen 5 und 35 % besonders vorteilhaft zwischen 15 und 25 %. Bei diesem Anteil an Kernen in der hochaufgereinigten ersten Fraktion ist ein besonders einfacher und kostengünstiger Betrieb möglich und ein signifikanter Anteil an Öl kann unbehandelt genutzt und muss nicht raffiniert werden.

Ein Proteinpräparat, das aus der ersten Fraktion von **Sonnenblumensamen** gewonnen wird, sollte für den Einsatz möglichst schonend weiter verarbeitet werden, um eine hohe Funktionalität und gute sensorische Eigenschaften zu erhalten.

So sollte der Schalenanteil in der Kernfraktion <1 Mass.-%, besonders vorteilhaft <0,1 Mass.-% betragen und in einer vorteilhaften Ausgestaltung die Pressung oder mechanische Entölung der Kerne bis zu einem Ölgehalt von >10 Mass.-% bis <30 Mass.-% erfolgen, vorteilhaft zwischen 10 und 20 Mass.-%, bei einer mittleren Temperatur der ersten Fraktion über der Dauer des Pressvorgangs unter 80 °C, vorteilhaft unter 60 °C. In einer nachfolgenden Lösemittelbehandlung mit einem organischen Lösemittel z.B. mit Hexan, überkritischem CO2 oder Ethanol, erfolgt eine weitere Ölabreicherung auf einen Restölgehalt unter 3 Mass.-%, vorteilhaft unter 2 Mass.-%.

Das bei dieser Behandlung erhaltene Proteinpräparat aus **Sonnenblumensamen** hat die folgenden Eigenschaften: Es hat einen Proteingehalt von weniger als 90 Mass.-% bezogen auf die Trockenmasse (TS), vorteilhaft weniger als 80 Mass.-%, besonders vorteilhaft weniger als 70 Mass.-%, hat eine Helligkeit L*, bestimmt gemäß CIE-L*a*b*-Farbmessung, von mindestens 70, vorteilhaft >80, und weist zumindest wasserbindende, ölbindende und emulgierende Funktionalitäten auf. Dabei beträgt das Wasserbindevermögen des Präparats >1 ml pro Gramm TS, bevorzugt >2 ml pro Gramm TS. Das Ölbindevermögen beträgt >0,5 ml/g TS, bevorzugt >1 ml/g TS und die Emulgierkapazität beträgt >300 ml/g TS, bevorzugt >400 ml/g, besonders bevorzugt >500 ml/g. Die Protein-löslichkeit im Präparat liegt über 25%, besonders bevorzugt über 40%.

Bei dem erfindungsgemäßen Verfahren ist es zudem möglich, neben der ersten und zweiten Fraktion eine weitere Fraktion herzustellen, die ebenfalls nahezu schalenfrei ist, die aber nicht für die Herstellung von Öl und Protein sondern für den direkten Verzehr genutzt werden kann. Diese Fraktion wird vorteilhaft aus einem sehr hohen Anteil an optisch ansprechenden, nicht gebrochenen Kernen gebildet. Dieser Anteil liegt vorteilhaft über 70 % der Kernmasse, besonders vorteilhaft über 90 % der Kernmasse in dieser Fraktion. Eine Limitierung des Anteils an gebrochenen Kernen ist für die erste Fraktion nicht gegeben, da für die Pressung der Kerne ein höherer Anteil >30% an gebrochenen Kernen eher von Vorteil ist, da durch den erhöhten Widerstand von gebrochenen Kernen gegenüber der Förderung durch die Schnecke beim Pressen der Pressvorgang vereinfacht wird. Vorteilhaft wird der Anteil an gebrochenen Kernen in der erstem Fraktion daher über 50% betragen, besonders vorteilhaft über 70%.

### Kurze Beschreibung der Zeichnungen

Das vorgeschlagene Verfahren wird nachfolgend anhand eines Ausführungsbeispiels in Verbindung mit der Zeichnung nochmals näher erläutert. Hierbei zeigt:

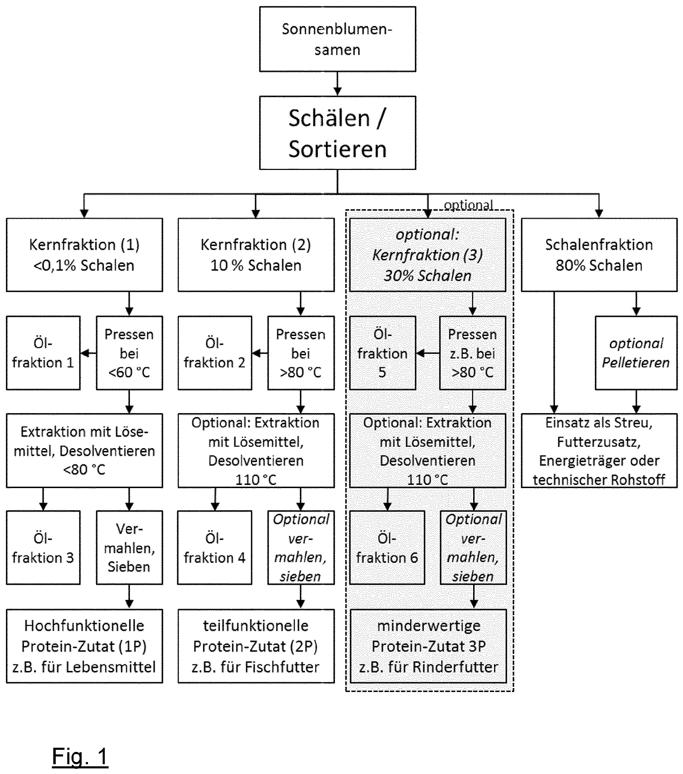

- Fig. 1: eine schematische Darstellung einer beispielhaften Ausgestaltung des Verfahrens.

### Ausführungsbeispiel

In diesem Beispiel, wie es schematisch in Figur 1 dargestellt ist, wurden aus weitestgehend von Besatz befreiten Sonnenblumensamen mit Hilfe eines Prallschälers, gefolgt von mehreren Siebungen, Sichtungen und Sortiervorgängen drei Fraktionen gewonnen:
- 25 Mass.-% einer hochreinen ersten Fraktion, im Folgenden als Kernfraktion (1) bezeichnet, mit einem Schalenanteil von <0,1 Mass.-%,
- 20 Mass.-% einer zweiten Fraktion, im Folgenden als Kernfraktion (2) bezeichnet, mit einem Schalenanteil von 10 Mass.-%,
- 10 Mass.-% einer dritten Fraktion, im Folgenden als Kernfraktion (3) bezeichnet, mit einem Schalenanteil von 30 Mass.-% und
- 30 Mass.-% einer Schalenfraktion, die einen Schalenanteil von 80 Mass.-% aufwies.

Die Kernfraktion (1) wurde bei milden Temperaturen (<60 °C) bis zu einem Restölgehalt von 18 Mass.-% gepresst. Als Öl wurde nach Filtration ein sehr mild und nussig schmeckendes Speiseöl mit gelblicher Farbe erhalten, das nach Abtrennung von Trübstoffen als Speiseöl genutzt werden konnte.

Der Presskuchen wurde mit Hexan entölt und bei niedrigen Temperaturen unterhalb von 80°C desolventiert. Anschließend wurde der Feststoff in einer Labormühle analysenfein (Partikelgröße überwiegend <100 µm) vermahlen und hinsichtlich Farbe und der funktionellen Eigenschaften bewertet.

Das damit als erste Proteinzutat (1P) erhaltene Proteinmehl hatte einen Proteingehalt bezogen auf TS von 59 % (Faktor 6,25), einen Restölanteil von 2 % und zeigte nach CIE L*a*b* einen Helligkeitswert L* von 85. Es hatte einen neutralen, leicht nussigen Geschmack. Das Protein des Präparates war bei pH 7 zu 40% löslich und zeigte eine Emulgierkapazität von 480 ml pro Gramm Protein. Damit bietet sich diese Fraktion als hochfunktionelle Lebensmittelzutat für eine Vielzahl von anspruchsvollen Applikationen an.

Die Kernfraktion (2) wurde bei 90 °C bis zu einem Restölgehalt von 10 Mass.-% gepresst. Als Öl wurde nach Filtration ein leicht bitter schmeckendes, leicht trübes Speiseöl mit gelblicher Farbe erhalten. Es kann mit Hilfe einer Raffination zu einem Speiseöl weiter behandelt werden.

Der Presskuchen aus dieser Pressung wurde ebenfalls mit Hexan entölt und bei einer Temperatur von 110°C im Trockenschrank desolventiert. Anschließend wurde der Feststoff in einer Labormühle analysenfein (Partikelgröße überwiegend <100µm) vermahlen und hinsichtlich Farbe und der funktionellen Eigenschaften bewertet.

Das damit als zweites Proteinpräparat (2P) erhaltene Proteinmehl hatte einen Proteingehalt bezogen auf TS von 54 % (Faktor 6,25) und einen Restfettanteil von 1,8 % und zeigte nach CIE L*a*b* einen Helligkeitswert L* von 68. Es hatte einen leicht bitteren Geschmack und verursachte ein raues Mundgefühl. Das Protein des Mehls war bei pH 7 zu 25% löslich und zeigte eine Emulgierkapazität von 320 ml pro Gramm. Damit bietet sich diese Fraktion nicht für den Einsatz als Lebensmittelzutat wohl aber für anspruchsvolle Tierfutterapplikationen wie z.B. für Fischfutter oder Pet-Food an.

Ähnlich wie die Kernfraktion (2) wurde auch die Kernfraktion (3) verarbeitet. Aufgrund des hohen Schalenanteils war das Öl noch dunkler und etwas bitterer, was eine Raffination erforderlich macht.

Das damit als dritte Proteinzutat (3P) erhaltene Proteinmehl hatte einen Proteingehalt bezogen auf TS von 39 % (Faktor 6,25) und einen Restfettanteil von 1,7 % und zeigte nach CIE L*a*b* einen Helligkeitswert L* von 40. Es hatte einen bitteren Geschmack und verursachte ein sehr raues Mundgefühl. Das Protein des Mehls war bei pH 7 zu 25% löslich und zeigte eine Emulgierkapazität von 250 ml pro Gramm. Damit bietet sich diese Fraktion nur für einfache Tierfutter-Applikationen z.B. für Rinder an.

Die erhaltene Schalenfraktion bestand überwiegend (ca. 80 %) aus Schalen und einigen Resten an Kernfleisch und wurde nicht weiter untersucht, ebenso wie die nach der Hexanentölung gewonnenen Ölfraktionen.

In der vorliegenden Patentanmeldung wurde zur quantitativen Bestimmung der angegebenen Eigenschaften bzw. Werte auf folgende Bestimmungsverfahren zurückgegriffen:
- Proteingehalt:
   Der Proteingehalt ist definiert als der Gehalt, der sich aus der Bestimmung des Stickstoff und dessen Multiplikation mit dem Faktor 6,25 errechnet. Der Proteingehalt ist z. B. in Prozent bezogen auf die Trockenmasse (TS) angebbar.
- Farbe:
   Die wahrnehmbare Farbe wird mittels CIE-L*a*b*-Farbmessung bestimmt (vgl. DIN 6417). Dabei gibt die L*-Achse die Helligkeit an, wobei Schwarz den Wert 0 und Weiss den Wert 100 hat, die a*-Achse beschreibt den Grün- oder Rotanteil und die b*-Achse den Blau- oder Gelbanteil.
- Proteinlöslichkeit:
   Die Proteinlöslichkeit wird mittels Bestimmungsverfahren nach Morr et al. 1985 bestimmt (siehe den Zeitschriftenartikel: Morr C.V., German, B., Kinsella, J.E., Regenstein, J.M., Van Buren, J.P., Kilara, A., Lewis, B.A., Mangino, M.E, "A Collaborative Study to Develop a Standardized Food Protein Solubility Procedure. Journal of Food Science", Band 50 (1985) Seiten 1715-1718). Dabei wird das Proteinpräparat zu einem Masse-Volumenanteil von 1:25 bis 1:50 (w/v) (d. h. 1-2 g des Proteinpräparats auf 50 ml Lösung) in einer 0,1 M NaCl-Lösung bei Raumtemperatur suspendiert und unter Verwendung von 0,1 M HCl- oder NaOH-Lösung ca. 60 min bei einem pH-Wert von pH 7 gehalten und mit ca. 200 U/min gerührt und das unlösliche Sediment danach für 15 min bei 20tausendfacher Erdbeschleunigung (20000g) abzentrifugiert. Die Proteinlöslichkeit ist z. B. in Prozent angebbar, wobei eine Proteinlöslichkeit von x % bedeutet, dass x % des im Präparat vorhandenen Proteins im geklärten Überstand wiedergefunden werden, wenn die genannte Methode angewendet wird.
- Wasserbindung:
   Das Wasserbindevermögen wird mittels dem AACC-Bestimmungsverfahren ermittelt, wie es angegeben ist in: American Association of Cereal Chemists, "Approved methods of the AACC". 10th ed., AACC. St. Paul, MN, 2000b; Method 56-20. "Hydration capacity of pregelatinized cereal products". Das Wasserbindevermögen ist z. B. in ml/g angebbar, d. h. Milliliter gebundenes Wasser pro Gramm Präparat, und wird gemäss dem AACC-Bestimmungsverfahren bestimmt über das Gewicht des mit Wasser gesättigten Sediments abzüglich der Einwaage des trockenen Präparats nach Mischung von ca. 2 g Proteinpräparat mit ca. 40 ml Wasser für 10 Minuten und Zentrifugation bei 1000g für 15 Minuten bei 20°C.
- Ölbindung:
   Das Ölbindevermögen wird mittels einem Bestimmungsverfahren ermittelt, wie es angegeben ist in: Ludwig I., Ludwig, E., Pingel B., "Eine Mikromethode zur Bestimmung der Fettbindekapazität". Nahrung/Food, 1989, 33(1), 99.
   Das Ölbindevermögen ist z. B. in ml/g angebbar, d. h. Milliliter gebundenes Öl pro Gramm Präparat, und wird gemäß o.g. Bestimmungsverfahren gemessen als Volumen des ölbindenden Sediments nach Mischung von 1,5 g Proteinpräparat mit 15 ml Maiskeimöl für 1 Minute und Zentrifugation bei 700g für 15 Minuten bei 20°C.
- Emulgierkapazität:
   Die Emulgierkapazität wird mittels der sogenannten Konduktivitätsmessungs-Methode bestimmt, bei welcher eine 1 %igen Suspension des Proteinpräparats von 100 ml, pH 7, Maiskeimöl zugegeben wird bis zur Phaseninversion der Öl-in-Wasser-Emulsion. Die Emulgierkapazität ist definiert als das maximale Ölaufnahmevermögen dieser Suspension, bestimmt über die spontane Abnahme der Leitfähigkeit bei der Phaseninversion (vgl. den Zeitschriftenartikel von Wäsche, A., Müller, K., Knauf, U., "New processing of lupin protein isolates and functional properties". Nahrung/Food, 2001, 45, 393-395) und ist z. B. angebbar in ml Öl/g, d. h. Milliliter emulgiertes Öl pro Gramm Proteinpräparat.
- Restölgehalt:
   Der Restölgehalt wird mit der Soxhlet-Methode AOAC 963.15 bestimmt, d.h. durch gravimetrische Bestimmung nach Soxhletextraktion.

## Patentansprüche

1. Verfahren zur Gewinnung wenigstens eines Proteinpräparates und mehrerer Ölfraktionen aus den Samen von Sonnenblumen, das wenigstens folgende Schritte umfasst:
- Bereitstellen oder Bilden von wenigstens drei Fraktionen aus den Samen, von denen
-- eine erste Fraktion einen Schalenanteil von < 1 Mass.-% aufweist,
-- eine zweite Fraktion einen Schalenanteil von < 20 Mass.-% aufweist, der höher als der Schalenanteil der ersten Fraktion ist, wenigstens aber > 0,3 Mass.-% beträgt, und
-- eine dritte Fraktion einen Schalenanteil von > 60 Mass.-% aufweist,
- Abtrennen von Öl aus der ersten Fraktion durch einen oder mehrere Entölungsschritte bis auf einen Restölgehalt von < 3 Mass.-%, wodurch eine oder mehrere Ölfraktionen und eine entölte erste Fraktion als ein erstes Proteinpräparat erhalten werden, und
- Abtrennen von Öl aus der zweiten Fraktion, wodurch eine oder mehrere weitere Ölfraktionen erhalten werden.

2. Verfahren nach Anspruch 1,
**dadurch gekennzeichnet,**
**dass** das Bilden der wenigstens drei Fraktionen folgende Schritte umfasst:
- Schälen der Samen und
- Entfernen eines Teils der Schalen durch Sieben und/oder Sichten und/oder Sortieren derart, dass die wenigstens drei Fraktionen mit den angegebenen Schalenanteilen erhalten werden.

3. Verfahren nach Anspruch 1 oder 2,
**dadurch gekennzeichnet,**
**dass** eine oder mehrere weitere Fraktionen bereitgestellt oder gebildet werden, die Proteine aus den Kernen der Sonnenblumensamen enthalten und aus denen anschließend jeweils Öl und ein proteinhaltiger Rückstand mit einem Proteingehalt gewonnen werden, der höher als ein Proteingehalt der Schalen ist.

4. Verfahren nach einem der Ansprüche 1 bis 3,
**dadurch gekennzeichnet,**
**dass** das Abtrennen von Öl aus der ersten Fraktion durch mechanische Teilentölung der ersten Fraktion, um eine erste Ölfraktion und eine erste Rückstandsfraktion zu erhalten, und anschließende ein- oder mehrmalige Lösemittel-Extraktion aus der ersten Rückstandsfraktion erfolgt.

5. Verfahren nach Anspruch 4,
**dadurch gekennzeichnet,**
**dass** die mechanische Teilentölung bis auf einen Ölgehalt von > 10 Mass.-% und < 30 Mass.-% bei einer mittleren Temperatur der ersten Fraktion über der Dauer der mechanischen Teilentölung von unter 80 °C erfolgt.

6. Verfahren nach einem der Ansprüche 1 bis 5,
**dadurch gekennzeichnet,**
**dass** das Bereitstellen oder Bilden der wenigstens drei Fraktionen aus den Samen derart erfolgt, dass die erste Fraktion zwischen 1 und 80 %, vorteilhaft zwischen 5 und 35 %, besonders vorteilhaft zwischen 15 und 25 % der Anzahl der Kerne enthält, die im Ausgangsmaterial für das Verfahren vorhanden sind.

7. Verfahren nach einem der Ansprüche 1 bis 6,
**dadurch gekennzeichnet,**
**dass** das Bereitstellen oder Bilden der wenigstens drei Fraktionen aus den Samen derart erfolgt, dass die dritte Fraktion einen Schalenanteil von > 80 Mass.-% und < 99 Mass.-%, vorteilhaft < 90 Mass.-% aufweist.

8. Verfahren nach einem der Ansprüche 1 bis 7,
**dadurch gekennzeichnet,**
**dass** das Bereitstellen oder Bilden der wenigstens drei Fraktionen aus den Samen derart erfolgt, dass die erste Fraktion einen Schalenanteil von < 0,5 Mass.-%, vorteilhaft < 0,1 Mass.-% aufweist.

9. Verfahren nach einem der Ansprüche 1 bis 8,
**dadurch gekennzeichnet,**
**dass** das Bereitstellen oder Bilden der wenigstens drei Fraktionen aus den Samen derart erfolgt, dass die zweite Fraktion einen Schalenanteil von < 10 Mass.-% aufweist.

10. Verfahren nach einem der Ansprüche 1 bis 9,
**dadurch gekennzeichnet,**
**dass** das Abtrennen von Öl aus der ersten Fraktion durch den einen oder die mehreren Entölungsschritte bis auf einen Restölgehalt von < 2 Mass.-% erfolgt.

11. Verfahren nach einem der Ansprüche 1 bis 10,
**dadurch gekennzeichnet,**
**dass** aus der zweiten Fraktion durch einen oder mehrere Entölungsschritte Öl bis auf einen Restölgehalt von < 10 Mass.-%, vorteilhaft < 3 Mass.-% abgetrennt wird, wodurch die eine oder die mehreren weiteren Ölfraktionen und eine entölte zweite Fraktion als ein zweites Proteinpräparat erhalten werden.

12. Verfahren nach Anspruch 11,
**dadurch gekennzeichnet,**
**dass** das Abtrennen von Öl aus der zweiten Fraktion durch mechanische Teilentölung der zweiten Fraktion erfolgt.

13. Verfahren nach Anspruch 11,
**dadurch gekennzeichnet,**
**dass** das Abtrennen von Öl aus der zweiten Fraktion durch mechanische Teilentölung der zweiten Fraktion, um eine zweite Ölfraktion und eine zweite Rückstandsfraktion zu erhalten, und anschließende ein- oder mehrmalige Lösemittel-Extraktion aus der zweiten Rückstandsfraktion erfolgt.

## Claims

1. Method for obtaining at least one protein preparation and several oil fractions from the seeds of sunflowers, which comprises at least the following steps:
- providing or forming at least three fractions from the seeds, of which
-- a first fraction has a shell content of <1 mass percent,
-- a second fraction has a shell content of <20 mass percent, which is greater than the shell content of the first fraction, but is at least >0.3 mass percent, and
-- a third fraction has a shell content of >60 mass percent,
- separating oil from the first fraction through one or more de-oiling steps down to a residual oil content of <3 mass percent, with the result that one or more oil fractions and an oil-free first fraction as a first protein preparation are obtained, and
- separating oil from the second fraction, with the result that one or more further oil fractions are obtained.

2. Method according to Claim 1,
**characterized in that**
forming the at least three fractions comprises the following steps:
- shelling the seeds and
- removing a part of the shells by sieving and/or winnowing and/or sorting in such manner that the at least three fractions are obtained with the stated shell contents.

3. Method according to Claim 1 or 2,
**characterized in that**
one or more further fractions is/are provided or formed that contain proteins from the kernels of the sunflower seeds, and from which oil and a protein-containing residue are then recovered, each having a protein content which is greater than a protein content of the shells.

4. Method according to any one of Claims 1 to 3,
**characterized in that**
the separation of oil from the first fraction is carried out by mechanical partial de-oiling of the first fraction to obtain a first oil fraction and a first residue fraction, und subsequent solvent extraction once or multiple times from the first residue fraction.

5. Method according to Claim 4,
**characterized in that**
the mechanical partial de-oiling is carried out at an average temperature of the first fraction below 80°C for the duration of the mechanical partial de-oiling to reach an oil content of >10 mass percent and <30 mass percent.

6. Method according to any one of Claims 1 to 5,
**characterized in that**
the provision or formation of the at least three fractions from the seeds takes place in such manner that the first fraction contains between 1 and 80%, advantageously between 5 and 35%, particularly advantageously between 15 and 25% of the quantity of kernels that are present in the starting material for the method.

7. Method according to any one of Claims 1 to 6,
**characterized in that**
the provision or formation of the at least three fractions from the seeds takes place in such manner that the third fraction has a shell content of >80 mass percent and <99 mass percent, advantageously <90 mass percent.

8. Method according to any one of Claims 1 to 7,
**characterized in that**
the provision or formation of the at least three fractions from the seeds takes place in such manner that the first fraction has a shell content von <0.5 mass percent, advantageously <0.1 mass percent.

9. Method according to any one of Claims 1 to 8,
**characterized in that**
the provision or formation of the at least three fractions from the seeds takes place in such manner that the second fraction has a shell content of <10 mass percent.

10. Method according to any one of Claims 1 to 9,
**characterized in that**
the separation of oil from the first fraction is carried out through the one or several de-oiling steps until a residual oil content of <2 mass percent is reached.

11. Method according to any one of Claims 1 to 10,
**characterized in that**
through the one or more de-oiling steps, oil is separated from the second fraction until a residual oil content of <10 mass percent, advantageously <3 mass percent is reached, as a result of which the one or more further oil fractions and an oil-free second fraction as a second protein preparation are obtained.

12. Method according to Claim 11,
**characterized in that**
the separation of oil from the second fraction is carried out by mechanical partial de-oiling of the second fraction.

13. Method according to Claim 11,
**characterized in that**
the separation of oil from the second fraction is carried out by mechanical partial de-oiling of the second fraction in order to obtain a second oil fraction and a second residue fraction, followed by solvent extraction once or multiple times from the second residue fraction.

## Revendications

1. Procédé d'obtention d'au moins une préparation protéique et de plusieurs fractions huileuses à partir de graines de tournesol, comprenant au moins les étapes suivantes :
- fournir ou former au moins trois fractions à partir des coques, dont :
-- une première fraction a une teneur en coques inférieure à 1 % en poids ;
-- une deuxième fraction a une teneur en coques inférieure à 20 % en poids, qui est supérieure à la teneur en coques de la première fraction mais d'au moins 0,3 % en poids et
-- une troisième fraction a une teneur en coques supérieure à 60 % en poids ;
- séparer l'huile de la première fraction par une ou plusieurs étapes de déshuilage jusqu'à une teneur en huile résiduelle inférieure à 3 % en poids, ce qui permet d'obtenir une ou plusieurs fractions huileuses et une première fraction déshuilée constituant une première préparation protéique et
- séparer l'huile de la deuxième fraction, ce qui permet d'obtenir une ou plusieurs autres fractions huileuses.

2. Procédé selon la revendication 1, **caractérisé en ce que** la formation des au moins trois fractions comprend les étapes suivantes :
- décortiquer les graines et
- éliminer une partie des coques par tamisage et/ou criblage et/ou tri, de manière à obtenir au moins trois fractions présentant les teneurs en coques spécifiées.

3. Procédé selon la revendication 1 ou 2, **caractérisé en ce qu'**une ou plusieurs fractions supplémentaires sont fournies ou formées, qui contiennent des protéines provenant des noyaux des graines de tournesol et à partir desquelles on obtient ensuite de l'huile et un résidu protéique dont la teneur en protéines est supérieure à la teneur en protéines des coques.

4. Procédé selon une des revendications 1 à 3, **caractérisé en ce que** la séparation de l'huile de la première fraction est effectuée par déshuilage mécanique partiel de la première fraction, afin d'obtenir une première fraction d'huile et une première fraction de résidu, suivie d'une extraction par solvant unique ou multiple de la première fraction de résidu.

5. Procédé selon la revendication 4, **caractérisé en ce que** le déshuilage mécanique partiel est effectué jusqu'à une teneur en huile supérieure à 10 % en poids et inférieure à 30 % en poids, à une température moyenne de la première fraction inférieure à 80 °C pendant toute la durée du déshuilage mécanique partiel.

6. Procédé selon une des revendications 1 à 5, **caractérisé en ce que** la fourniture ou la formation d'au moins trois fractions à partir des graines est effectuée de telle sorte que la première fraction contienne entre 1 et 80 %, avantageusement entre 5 et 35 %, et particulièrement avantageusement entre 15 et 25 % du nombre de noyaux, qui sont présents dans la matière première pour le procédé.

7. Procédé selon une des revendications 1 à 6, **caractérisé en ce que** la fourniture ou la formation d'au moins trois fractions à partir des graines est réalisée de telle sorte que la troisième fraction présente une teneur en coques supérieure à 80 % en masse et inférieure à 99 % en masse, avantageusement inférieure à 90 % en masse.

8. Procédé selon une des revendications 1 à 7, **caractérisé en ce que** la fourniture ou la formation d'au moins trois fractions à partir des graines est réalisée de telle sorte que la première fraction présente une teneur en coques inférieure à 0,5 % en poids, avantageusement inférieure à 0,1 % en poids.

9. Procédé selon une des revendications 1 à 8, **caractérisé en ce que** la fourniture ou la formation d'au moins trois fractions à partir des graines est réalisée de telle sorte que la deuxième fraction présente une teneur en coques inférieure à 10 % en poids.

10. Procédé selon une des revendications 1 à 9, **caractérisé en ce que** la séparation de l'huile de la première fraction est effectuée par une ou plusieurs étapes de déshuilage jusqu'à une teneur résiduelle en huile inférieure à 2 % en poids.

11. Procédé selon une des revendications 1 à 10, **caractérisé en ce que** l'huile est séparée de la deuxième fraction par une ou plusieurs étapes de déshuilage jusqu'à une teneur résiduelle en huile inférieure à 10 % en poids, avantageusement inférieure à 3 % en poids, ce qui permet d'obtenir une ou plusieurs autres fractions d'huile et une deuxième fraction déshuilée comme deuxième préparation protéique.

12. Procédé selon la revendication 11, **caractérisé en ce que** la séparation de l'huile de la deuxième fraction est effectuée par déshuilage mécanique partiel de la deuxième fraction.

13. Procédé selon la revendication 11, **caractérisé en ce que** la séparation de l'huile de la deuxième fraction est réalisée par déshuilage mécanique partiel de la deuxième fraction afin d'obtenir une deuxième fraction d'huile et une deuxième fraction de résidu, suivie d'une extraction par solvant unique ou multiple de la deuxième fraction de résidu.
